# FASCICULE DE BREVET EUROPEEN

(11) **EP 1 458 459 B1**
(45) Date de publication et mention de la délivrance du brevet: **30.01.2008**
(21) Numéro de dépôt: 02806330.3
(22) Date de dépôt: 17.12.2002
(51) Int. Cl.: B01D 46/52

(54) **DISPOSITIF DE FILTRATION D'AIR PERFECTIONNE ET INSTALLATION DE CIRCULATION D'AIR DANS UN VEHICULE AUTOMOBILE COMPRENANT CE DISPOSITIF**
VERBESSERTE LUFTFILTERVORRICHTUNG UND LUFTZIRKULATIONSANLAGE IN EINEM DIESE UMFASSENDEN KRAFTFAHRZEUG
IMPROVED AIR FILTER DEVICE AND AIR CIRCULATION INSTALLATION IN A MOTOR VEHICLE COMPRISING SAME

(30) Priorité: 21.12.2001 FR 0116748; 31.07.2002 FR 0209779
(43) Date de publication de la demande: 22.09.2004
(73) Titulaire: Valeo Matériaux de Friction SAS, 87020 Limoges (FR)
(72) Inventeur: GILLES, Olivier, F-14250 Hottot les Bagues (FR); SIMON, Olivier, F-14123 Ifs (FR)
(74) Mandataire: de la Bigne, Guillaume Michel Marie
(86) Numéro de dépôt international: PCT/FR2002/004393
(87) Numéro de publication internationale: WO 2003/059491

(56) Documents cités:
- DE-A- 4 327 368
- FR-A- 2 772 670
- JP-A- 6 226 024
- PATENT ABSTRACTS OF JAPAN vol. 1995, no. 8, 29 septembre 1995 (1995-09-29) & JP 07 112108 A (JAPAN VILENE CO), 2 mai 1995 (1995-05-02)
- PATENT ABSTRACTS OF JAPAN vol. 1998, no. 13, 30 novembre 1998 (1998-11-30) & JP 10 216445 A (KIORITZ CORP.), 18 août 1998 (1998-08-18)
- PATENT ABSTRACTS OF JAPAN vol. 2000, no. 14, 5 mars 2001 (2001-03-05) & JP 2000 317237 A (TOKYO ROKI CO), 21 novembre 2000 (2000-11-21)

## Description

La présente invention concerne un dispositif de filtration d'air perfectionné et une installation de circulation d'air dans un véhicule automobile comprenant ce dispositif.

Elle s'applique en particulier à la filtration d'air circulant dans un véhicule automobile, notamment d'air climatisé ou non destiné à circuler dans l'habitacle du véhicule.

On connaît déjà dans l'état de la technique un dispositif de filtration d'air, du type comprenant :
- un cadre de canalisation d'air, portant un média filtrant, ce cadre étant muni de parois s'étendant suivant des directions longitudinale et transversale sensiblement orthogonales à une direction générale d'écoulement de l'air à travers le cadre, le cadre comportant au moins deux parties reliées entre elles par des moyens d'articulation autour d'un axe sensiblement transversal, si bien que lorsque ces moyens d'articulation sont opérationnels, le cadre est déformable entre une configuration de référence sensiblement plane et au moins une configuration d'aspect général cintré, et
- des moyens de limitation du cintrage du cadre par limitation du déplacement angulaire relatif des deux parties du cadre autour de l'axe d'articulation,
le média filtrant comprenant au moins deux pans délimitant un pli de ce média filtrant coïncidant sensiblement avec l'axe d'articulation des deux parties du cadre.

Dans le cas particulier d'une installation de circulation d'air dans un véhicule automobile, le dispositif de filtration d'air est logé dans un boîtier de canalisation d'air, agencé dans le corps du véhicule. De façon classique, le cadre est fixé sur un siège passant formant un accès au boîtier.

Le dispositif de filtration est démonté périodiquement pour vérifier le bon état du média filtrant et, si nécessaire, remplacer ce média filtrant. Généralement, on remplace l'ensemble constitué par le cadre et le média filtrant.

Dans certains cas, le siège passant formant l'accès au boîtier de canalisation d'air est agencé dans un compartiment du véhicule encombré par divers organes du véhicule. Il est donc nécessaire pour extraire du boîtier le cadre portant le média filtrant et/ou pour introduire ce cadre dans ce boîtier de déformer le cadre dans sa configuration cintrée.

Selon certains types connus de dispositifs de filtration, le cadre ne peut être déformé que dans une seule configuration cintrée qui est soit concave soit convexe en considérant le sens d'écoulement de l'air à travers le cadre. Ainsi, si le cadre peut adopter une configuration cintrée concave, il ne peut pas adopter de configuration cintrée convexe et réciproquement.

Selon d'autres types connus de dispositifs de filtration, tel que, par exemple, celui qui est décrit dans JP 06 226024, les débattements angulaires des différentes parties articulées du cadre ne sont pratiquement pas limités ou ne sont limités que dans un seul sens ce qui pose des problèmes de manutention de ce cadre lors de son démontage du boîtier de canalisation d'air ou de son montage dans ce boîtier.

L'invention a pour but de proposer un dispositif de filtration d'air muni d'un cadre susceptible d'être cintré, ceci en limitant le cintrage du cadre pour ne pas gêner les opération de manutention du cadre.

A cet effet, l'invention a pour objet un dispositif de filtration d'air, du type précité, **caractérisé en ce que**
- les moyens d'articulation relient les parties du cadre de façon que, lorsque ces moyens d'articulation sont opérationnels, le cadre est déformable entre la configuration de référence et deux configurations cintrées de courbures opposées, dites concave et convexe, et
- les moyens de limitation du cintrage du cadre comprenant des premiers et seconds moyens de limitation du cintrage respectivement concave et convexe, ces premiers et seconds moyens de limitation du cintrage concave et convexe étant ménagés sur au moins une de deux parois longitudinales opposées du cadre,
- lorsque le cadre est dans sa configuration de référence, il délimite des première et seconde faces passantes opposées de passage d'air, les premiers moyens de limitation du cintrage concave comportant deux butées complémentaires formées par deux bords, dits bords de limitation de concavité, délimitant longitudinalement deux parties articulées d'une paroi longitudinale, ces bords complémentaires de limitation de concavité divergeant vers la première face de passage d'air lorsque le cadre est dans sa configuration de référence,
- les seconds moyens de limitation du cintrage convexe comportant deux butées complémentaires formées par deux bords, dits bords de limitation de convexité, délimitant longitudinalement deux parties articulées d'une paroi longitudinale, ces bords complémentaires de limitation de convexité divergeant vers la seconde face de passage d'air lorsque le cadre est dans sa configuration de référence, et
- les deux bords complémentaires de limitation de concavité s'étendent le long des deux pans du média filtrant délimitant le pli.

Suivant des caractéristiques de différents modes de réalisation de ce dispositif de filtration d'air :
- les deux parties articulées d'une paroi longitudinale sont délimitées longitudinalement par les bords complémentaires de limitation de concavité et par les bords complémentaires de limitation de convexité prolongeant ces bords complémentaires de limitation de concavité ;
- le média filtrant a une forme générale en accordéon et comporte des plis de pas différents, le pas des plis coïncidant sensiblement avec un axe d'articulation étant supérieur au pas des plis ne coïncidant pas avec un axe d'articulation ;
- les premiers et seconds moyens de limitation du cintrage concave et convexe sont ménagés respectivement de part et d'autre d'une nervure longitudinale ménagée sur au moins une de deux parois longitudinales opposées du cadre, en considérant la direction d'écoulement de l'air, cette nervure étant destinée à guider le cadre dans un boîtier de logement du cadre ;
- les premiers moyens de limitation du cintrage concave sont ménagés dans une zone du cadre dont la majeure partie est disposée au même niveau que le média filtrant en considérant la direction d'écoulement de l'air, les seconds moyens de limitation du cintrage convexe étant ménagés dans une zone du cadre dont la majeure partie est décalée par rapport au média filtrant en considérant la direction d'écoulement de l'air ;
- le média filtrant est solidaire du cadre, les moyens d'articulation des deux parties du cadre comprenant une partie du média filtrant formant charnière ;
- la partie du média filtrant formant charnière est délimitée par un pli de ce média filtrant ;
- le dispositif comprend des moyens d'inhibition temporaire des moyens d'articulation ;
- les moyens d'inhibition des moyens d'articulation comprennent des moyens sécables de liaison des deux parties du cadre, ces moyens de liaison sécables coïncidant de préférence sensiblement avec l'axe d'articulation des deux parties du cadre ;
- les moyens de liaison sécables forment un tronçon de la nervure de guidage ;
- les moyens de liaison sécables sont venus de matière avec la paroi longitudinale du cadre portant les premiers et seconds moyens de limitation du cintrage concave et convexe, cette paroi longitudinale étant en plastique ;
- le cadre comporte trois parties reliées deux à deux par des moyens d'articulation autour de deux axes sensiblement transversaux.

L'invention a également pour objet une installation de circulation d'air dans un véhicule automobile, **caractérisée en ce qu'**elle comprend un dispositif de filtration tel que défini ci-dessus.

Suivant une autre caractéristique de cette installation, celle-ci approvisionne un habitacle du véhicule en air climatisé ou non.

L'invention sera mieux comprise à la lecture de la description qui va suivre, donnée uniquement à titre d'exemple et faite en se référant aux dessins dans lesquels :
- la figure 1 est une vue en perspective d'un dispositif de filtration selon un premier mode de réalisation de l'invention ; et
- les figures 2 à 4 sont des vues en coupe longitudinale du dispositif de filtration représenté sur la figure 1, le cadre de canalisation d'air étant représenté respectivement dans ses configurations de référence, cintrée concave et cintrée convexe ;
- les figures 5 et 6 sont des vues similaires aux figures 2 et 3 d'un dispositif de filtration selon un second mode de réalisation de l'invention.

On a représenté sur les figures un dispositif de filtration d'air selon un premier mode de réalisation de l'invention, désigné par la référence générale 10.

Dans l'exemple illustré, le dispositif de filtration 10 est agencé dans une installation de circulation d'air dans un véhicule automobile. Cette installation est destinée, par exemple, à approvisionner un habitacle du véhicule en air climatisé ou non.

Le dispositif de filtration 10 comprend un cadre 12 de canalisation de l'air, portant un média filtrant 14, de type classique, par exemple tel que décrit dans FR-A-2 779 662 (FR-98 07 273) ou FR-A-2 772 670 (FR-97 16 262). Le média filtrant 14 comprend, dans l'exemple illustré, un matériau multicouche agencé en accordéon, porté le cas échéant par des grilles non représentées.

Le cadre 12 est destiné à être logé dans un boîtier de canalisation d'air (non représenté sur les figures), agencé dans le corps du véhicule. Le cadre 12 est fixé de façon connue en soi sur un siège passant formant un accès au boîtier de canalisation d'air.

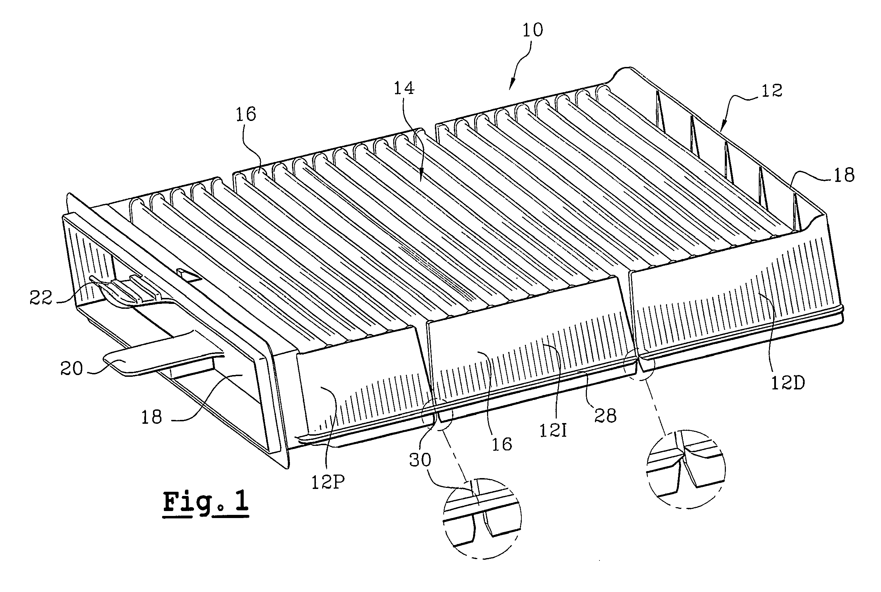

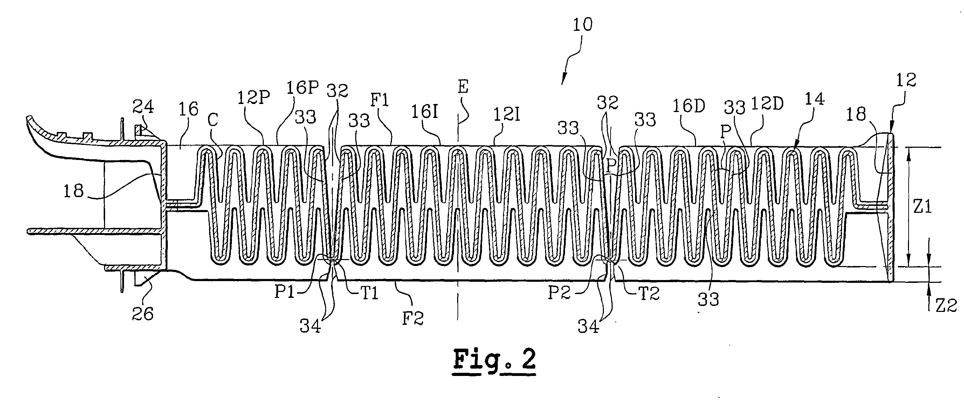

Sur les figures 1 et 2, le cadre 12 est représenté dans une configuration de référence sensiblement plane. Dans cette configuration de référence, le cadre 12 a une forme générale parallélépipédique aplatie. Le cadre 12 est délimité par quatre parois de canalisation d'air, à savoir deux parois opposées 16, s'étendant suivant une direction longitudinale, reliées entre elles par deux parois opposées 18, s'étendant suivant une direction transversale. Les directions longitudinale et transversale sont sensiblement orthogonales à une direction générale E d'écoulement de l'air à travers le cadre 12. Cette direction d'écoulement E est représentée en traits mixtes sur la figure 2.

Dans sa configuration de référence, chaque paroi 16, 18 du cadre 12 a une forme générale rectangulaire plane. Par ailleurs, le cadre 12 délimite des première F1 et seconde F2 faces passantes opposées de passage d'air. Les faces passantes F1, F2 forment par exemple des faces d'entrée et de sortie d'air respectivement.

En se référant notamment à la figure 2, on voit que la surface interne des parois longitudinales 16 comporte des reliefs (bas relief ou haut relief) délimitant un contour C suivant approximativement les ondes du média filtrant.

Le cadre 12 est fabriqué de préférence en plastique, le média filtrant 14 étant fixé de façon connue en soi aux parois 16, 18 du cadre.

Une des parois transversales 18 du cadre 12 est munie de moyens de préhension classiques 20, 22 permettant la manutention du cadre.

Dans ce qui suit, un élément sera qualifié de proximal lorsqu'il est proche de la paroi transversale 18 portant les moyens de préhension 20, 22 et de distal dans le cas contraire.

La paroi transversale proximale 18 est munie de moyens d'accrochage classiques 24, 26 sur le siège donnant accès au boîtier de canalisation d'air.

Le cadre 12 comporte au moins deux parties reliées entre elles par des moyens d'articulation autour d'un axe sensiblement transversal. Dans l'exemple illustré, le cadre 12 comporte trois parties, à savoir deux parties proximale 12P et distale 12D entre lesquelles est intercalée longitudinalement une partie intermédiaire 12I.

Aux parties articulées 12P, 12D, 12I du cadre correspondent des parties articulées 16P, 16D, 16I des parois longitudinales du cadre.

Les trois parties du cadre 12P, 12D, 12I sont reliées deux à deux par des moyens d'articulation autour de deux axes T1, T2 sensiblement transversaux (sensiblement parallèles aux parois transversales 18 du cadre).

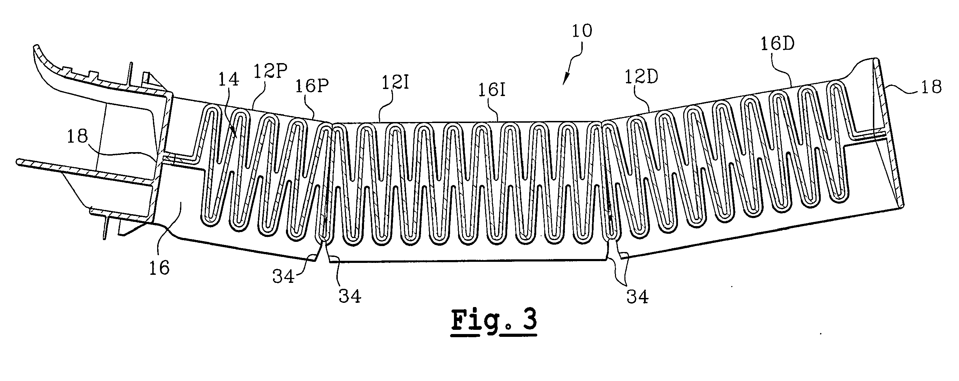

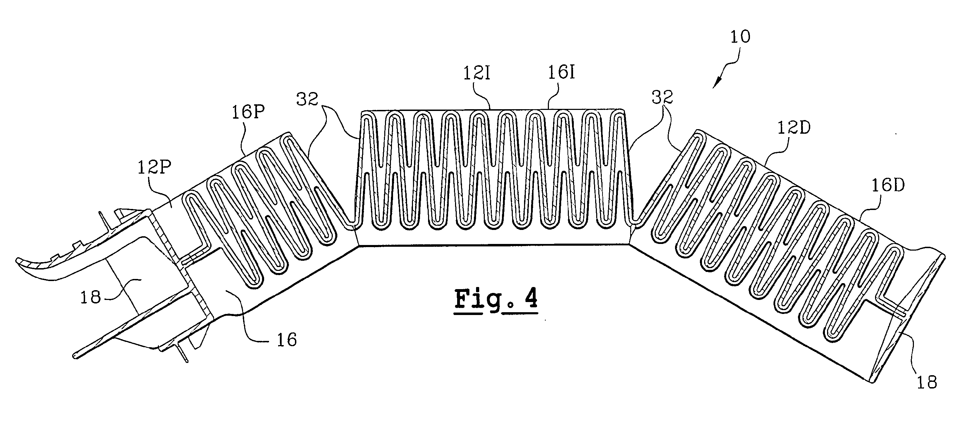

Ainsi, lorsque les moyens d'articulation reliant les trois parties 12P, 12D, 12I du cadre sont opérationnels, comme cela sera décrit plus en détail par la suite, le cadre est déformable entre la configuration de référence, représenté sur les figures 1 et 2, et deux configurations d'aspect général cintrées, représentées sur les figures 3 et 4. Les deux configurations cintrées représentées sur les figures 3 et 4 ont des courbures opposées, dites concave (figure 3) et convexe (figure 4). On notera que le caractère concave ou convexe de la configuration cintrée est défini par rapport au flux d'air rentrant dans le cadre 12.

Les moyens d'articulation de deux parties 12P, 12I, 12D adjacentes du cadre comprennent, dans l'exemple illustré, une partie du média filtrant 14 formant charnière. Cette partie formant charnière est délimitée plus particulièrement par un pli P1, P2 du média filtrant 14, ce pli P1, P2 coïncidant sensiblement avec un axe d'articulation T1, T2 de façon à matérialiser cet axe.

En se référant à la figure 1, on voit que chaque paroi longitudinale 18 est munie d'une nervure longitudinale 28. Cette nervure 28 est destinée à coopérer avec des moyens complémentaires du boîtier de canalisation d'air notamment pour guider le cadre 12 lors de son montage dans ce boîtier.

En variante, le cadre 12 pourrait ne comporter qu'une seule nervure de guidage 28 agencée sur une seule des parois longitudinales 16.

Les nervures de guidage 28 sont de préférence venues de matière avec les parois longitudinales en plastique 16.

On notera que les axes d'articulations T1, T2 sont sécants avec les nervures de guidage 28.

De préférence, le cadre 12 comprend des moyens d'inhibition temporaire des moyens d'articulation des parties 12P, 12D, 12I du cadre entre elles.

Dans l'exemple illustré, les moyens d'inhibition des moyens d'articulation comprennent au moins un tronçon 30 d'une nervure de guidage 28, ce tronçon 30 reliant entre elles deux parties adjacentes 12P, 12I, 12D du cadre, plus particulièrement deux parties adjacentes 16P, 16D, 16I d'au moins une paroi longitudinale du cadre.

Le tronçon 30, coïncidant de préférence sensiblement avec un axe d'articulation T1, T2, est sécable.

Sur la figure 1, on a représenté un tronçon sécable 30 d'une nervure 28 reliant les parties proximale 12P et intermédiaire 12I du cadre 12. Ce tronçon sécable 30, en plastique comme la nervure 28 avec laquelle il est venu de matière, coïncide avec l'axe d'articulation T1.

Il est possible d'associer deux tronçons sécables 30 à chacun des axes d'articulation T1, T2, ces deux tronçons sécables étant ménagés sur les nervures de guidage 28 portées par les deux parois longitudinales 16 du cadre.

Il est également possible d'associer un seul tronçon sécable 30 à chaque axe d'articulation T1, T2, les tronçons sécables étant disposés en alternance sur l'une ou l'autre des parois longitudinales 16 du cadre lorsque l'on considère la succession longitudinale des trois parties 12P, 12I, 12D du cadre.

Cette dernière possibilité facilite la rupture des tronçons sécables 30 par cintrage du cadre 12 et vrillage de ce cadre 12 autour d'un axe longitudinal.

Dans l'exemple illustré sur la figure 1, la partie proximale 12P est reliée à la partie intermédiaire 12I du cadre par un tronçon sécable 30 ménagé sur la nervure de guidage 28 visible sur la figure 1. Par contre, la partie intermédiaire 12I est reliée à la partie distale 12D du cadre par un tronçon sécable 30 ménagé sur la nervure 28 cachée sur la figure 1. La nervure de guidage 28 visible sur la figure 1 est interrompue entre les parties intermédiaire 12I et distale 12D du cadre 12.

Le dispositif de filtration d'air 10 comprend des moyens de limitation du cintrage du cadre 12 par limitation du déplacement angulaire relatif des parties adjacentes du cadre 12 autour des axes d'articulation correspondants T1, T2.

Plus particulièrement, les moyens de limitation du cintrage du cadre 12 comprennent des premiers et seconds moyens de limitation du cintrage respectivement concave et convexe. Ces moyens de limitation du cintrage sont ménagés sur au moins une des parois longitudinales 16 du cadre, de préférence sur les deux parois longitudinales 16 de ce cadre comme dans l'exemple illustré.

Les moyens de limitation du cintrage concave comportent deux butées complémentaires formées par deux bords 32, appelés par la suite bords de limitation de concavité, délimitant longitudinalement deux parties adjacentes articulées 16P, 16I, 16D des parois longitudinales.

On notera que les bords complémentaires 32 de limitation de concavité divergent vers la première face F1 de passage d'air lorsque le cadre 12 est dans sa configuration de référence (voir figure 2).

On notera également que les deux bords complémentaires 32 de limitation de concavité s'étendent le long de deux pans 33 du média filtrant 14 délimitant un pli P1, P2 de ce média filtrant coïncidant sensiblement avec un axe d'articulation T1, T2.

Dans ce qui suit, on appellera pas des plis du média filtrant 14 l'angle P formé par deux pans 33 adjacents (reliés par un même pli du média filtrant) divergeant vers la même face F1, F2 de passage d'air du cadre 12 lorsque ce cadre 12 est dans sa configuration de référence (voir figure 2).

Dans le premier mode de réalisation de l'invention, le pas P des plis du média filtrant 14 est sensiblement constant, si bien que le pas des plis ne coïncidant pas avec un axe d'articulation T1, T2 est le même que le pas des plis coïncidant sensiblement avec un axe d'articulation T1, T2.

Les bords complémentaires 32 de limitation de concavité coopèrent entre eux, par appui mutuel, comme cela est représenté sur la figure 3, pour limiter le cintrage concave du cadre 12.

Les moyens de limitation du cintrage convexe comportent deux butées complémentaires formées par deux bords 34, appelés par la suite bords de limitation de convexité, délimitant longitudinalement deux parties adjacentes articulées 16P, 161, 16D des parois longitudinales.

On notera que les bords complémentaires 34 de limitation de convexité divergent vers la seconde face F2 de passage d'air lorsque le cadre 12 est dans sa configuration de référence (voir figure 2).

On notera également que dans une même partie articulée 16P, 16I, 16D d'une paroi longitudinale, les bords complémentaires 34 de limitation de convexité prolongent les bords complémentaires 32 de limitation de concavité.

Les bords complémentaires 34 de limitation de convexité coopèrent entre eux, par appui mutuel, comme cela est représenté sur la figure 4 pour limiter le cintrage convexe du cadre 12.

En se référant à la figure 1, on voit que les bords 32 de limitation de concavité et les bords 34 de limitation de convexité sont ménagés respectivement de part et d'autre de la nervure longitudinale 28 en considérant la direction d'écoulement de l'air à travers le cadre 12. Ainsi, les bords 32, 34 de limitation de concavité et de convexité convergent vers la nervure de guidage 28 lorsque le cadre 12 est dans sa configuration de référence.

En se référant notamment à la figure 2, on voit que les bords 32 de limitation de concavité sont ménagés dans une zone Z1 du cadre 12 dont la majeure partie est disposée au même niveau que le média filtrant 14 en se référant à la direction E d'écoulement de l'air. Par contre, les bords complémentaires 34 de limitation de convexité sont ménagés dans une zone Z2 du cadre 12 dont la majeure partie est décalée (vers l'aval) par rapport au média filtrant 14 en se référant à la direction E d'écoulement de l'air.

Le dispositif de filtration tel que décrit ci-dessus est simple à utiliser.

Avant le premier montage du dispositif de filtration 10 dans un véhicule, le cadre 12 est maintenu dans sa configuration de référence (sensiblement plane), favorable à sa manutention, par les moyens d'inhibition des moyens d'articulation reliant les différentes parties 12P, 12I, 12D du cadre 12.

Lors du premier montage du dispositif de filtration 10 dans le boîtier de canalisation d'air ou bien lors du premier démontage de ce dispositif de filtration 10, les moyens d'inhibition des moyens d'articulation sont détruits par rupture des tronçons sécables 30 des parois longitudinales 16. Les moyens d'articulation des différentes parties 12P, 12I, 12D du cadre deviennent opérationnels. Le déplacement du cadre 12 à travers le siège de fixation est ainsi rendu possible, par cintrage du cadre 12, malgré l'encombrement du compartiment du véhicule dans lequel est agencé le dispositif de filtration 10.

La manutention du cadre 12 est facilitée par les bords complémentaires 32, 34 de limitation de la concavité et de la convexité du cadre 12.

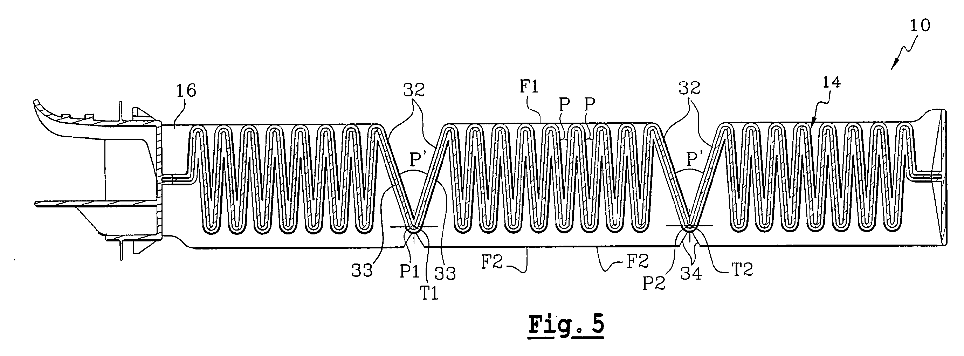

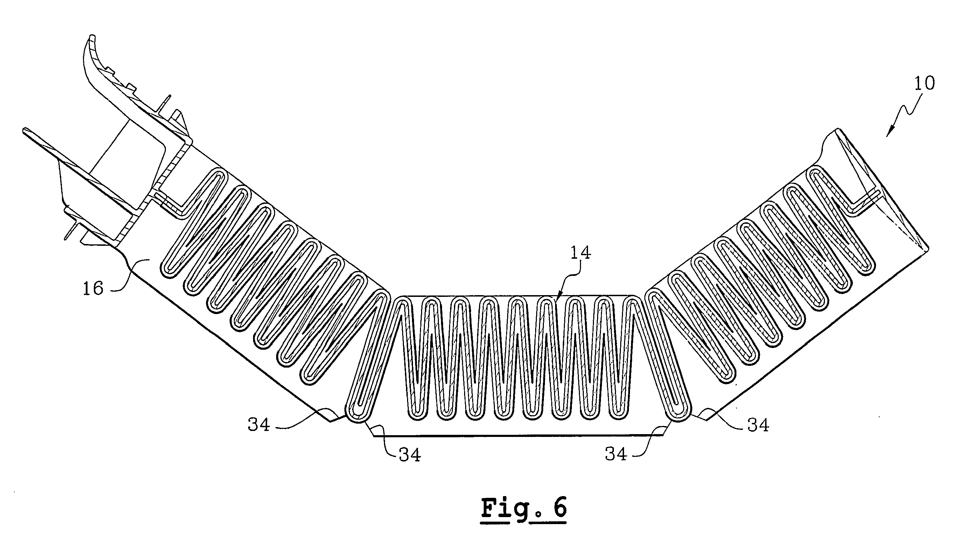

Sur les figures 5 et 6, on a représenté un dispositif de filtration d'air 10 selon un second mode de réalisation de l'invention. Sur ces figures, les éléments analogues à ceux des figures précédentes sont désignés par des références identiques.

Dans ce cas, le pas P des plis du média filtrant 14 n'est pas constant de manière que le pas P' des plis coïncidant sensiblement avec un axe d'articulation T1, T2 est supérieur au pas des plis ne coïncidant pas avec un axe d'articulation T1, T2.

Ainsi, les deux bords complémentaires 32 de limitation de concavité, s'étendant le long des deux pans 33 du média filtrant 14 délimitant un pli P1, P2 coïncidant sensiblement avec un axe T1, T2, forment entre eux un angle P' relativement important autorisant un cintrage plus important que dans le premier mode de réalisation de l'invention (voir figure 6).

L'invention ne se limite pas aux modes de réalisation décrits ci-dessus. En particulier, l'utilisation du dispositif de filtration selon l'invention n'est pas limitée à une installation de circulation d'air dans un véhicule automobile. En effet, le dispositif de filtration selon l'invention peut être utilisé dans des installations de circulation d'air très variées.

Parmi les avantages de l'invention, on notera que celle-ci permet de proposer un dispositif de filtration d'air muni d'un cadre, portant un média filtrant, déformable dans deux configurations cintrées de courbures opposées, concave et convexe.

Par ailleurs, le cintrage du cadre 12, aussi bien concave que convexe, est limité par les bords complémentaires 32, 34 de limitation de concavité et de convexité, ce qui facilite le démontage et le remontage éventuel du cadre 12 dans le boîtier de canalisation d'air.

Enfin, on notera que les moyens d'inhibition des moyens d'articulation reliant les différentes parties du cadre permettent de maintenir ce dernier dans une configuration sensiblement plane favorable à la manutention du dispositif de filtration avant son premier montage dans un véhicule.

## Revendications

1. Dispositif de filtration d'air, du type comprenant :
- un cadre (12) de canalisation d'air, portant un média filtrant (14), ce cadre (12) étant muni de parois (16, 18) s'étendant suivant des directions longitudinale et transversale sensiblement orthogonales à une direction générale (E) d'écoulement de l'air à travers le cadre, le cadre (12) comportant au moins deux parties (12P, 12I, 12D) reliées entre elles par des moyens d'articulation (P1, P2) autour d'un axe sensiblement transversal (T1, T2), si bien que lorsque ces moyens d'articulation sont opérationnels; le cadre (12) est déformable entre une configuration de référence sensiblement plane et au moins une configuration d'aspect général cintré, et
- des moyens (32, 34) de limitation du cintrage du cadre (12) par limitation du déplacement angulaire relatif des deux parties du cadre autour de l'axe d'articulation (T1, T2),
le média filtrant (14) comprenant au moins deux pans (33) délimitant un pli (P1, P2) de ce média filtrant coïncidant sensiblement avec l'axe (T1, T2) d'articulation des deux parties du cadre, **caractérisé en ce que** :
- les moyens d'articulation (P1, P2) relient les parties (12P, 12I, 12D) du cadre de façon que, lorsque ces moyens d'articulation sont opérationnels, le cadre (12) est déformable entre la configuration de référence et deux configurations cintrées de courbures opposées, dites concave et convexe, et
- les moyens de limitation du cintrage du cadre comprenant des premiers (32) et seconds (34) moyens de limitation du cintrage respectivement concave et convexe, ces premiers (32) et seconds (34) moyens de limitation du cintrage concave et convexe étant ménagés sur au moins une de deux parois longitudinales (16) opposées du cadre, et
- lorsque le cadre (12) est dans sa configuration de référence, il délimite des première (F1) et seconde (F2) faces passantes opposées de passage d'air, les premiers moyens de limitation du cintrage concave comportant deux butées complémentaires formées par deux bords, dits bords (32) de limitation de concavité, délimitant longitudinalement deux parties (16P, 161, 16D) articulées d'une paroi longitudinale, ces bords complémentaires (32) de limitation de concavité divergeant vers la première face (F1) de passage d'air lorsque le cadre (12) est dans sa configuration de référence, et
- les seconds moyens de limitation du cintrage convexe comportant deux butées complémentaires formées par deux bords, dits bords (34) de limitation de convexité, délimitant longitudinalement deux parties (16P, 161, 16D) articulées d'une paroi longitudinale, ces bords complémentaires (34) de limitation de convexité divergeant vers la seconde face (F2) de passage d'air lorsque le cadre est dans sa configuration de référence, et
- les deux bords complémentaires (32) de limitation de concavité s'étendent le long des deux pans (33) du média filtrant (14) délimitant le pli (P1, P2).

2. Dispositif selon la revendication 1, **caractérisé en ce que** les deux parties (16P, 161, 16D) articulées d'une paroi longitudinale sont délimitées longitudinalement par les bords complémentaires (32) de limitation de concavité et par les bords complémentaires (34) de limitation de convexité prolongeant ces bords complémentaires (32) de limitation de concavité.

3. Dispositif selon la revendication 1 ou 2, **caractérisé en ce que** le média filtrant (14) a une forme générale en accordéon et comporte des plis de pas (P, P') différents, le pas (P') des plis (P1, P2) coïncidant sensiblement avec un axe d'articulation (T1, T2) étant supérieur au pas (P) des plis ne coïncidant pas avec un axe d'articulation (T1, T2).

4. Dispositif selon l'une quelconque des revendications précédentes, **caractérisé en ce que** les premiers (32) et seconds (34) moyens de limitation du cintrage concave et convexe sont ménagés respectivement de part et d'autre d'une nervure longitudinale (28) ménagée sur au moins une de deux parois longitudinales (16) opposées du cadre, en considérant la direction (E) d'écoulement de l'air, cette nervure (28) étant destinée à guider le cadre dans un boîtier de logement du cadre.

5. Dispositif selon l'une quelconque des revendications précédentes, **caractérisé en ce que** les premiers moyens (32) de limitation du cintrage concave sont ménagés dans une zone (Z1) du cadre (12) dont la majeure partie est disposée au même niveau que le média filtrant (14) en considérant la direction (E) d'écoulement de l'air, les seconds moyens (34) de limitation du cintrage convexe étant ménagés dans une zone (Z2) du cadre dont la majeure partie est décalée par rapport au média filtrant (14) en considérant la direction (E) d'écoulement de l'air.

6. Dispositif selon l'une quelconque des revendications précédentes, **caractérisé en ce que** le média filtrant (14) est solidaire du cadre (12), les moyens d'articulation des deux parties du cadre comprenant une partie (P1, P2) du média filtrant formant charnière.

7. Dispositif selon la revendication 6, **caractérisé en ce que** la partie du média filtrant formant charnière est délimitée par un pli (P1, P2) de ce média filtrant.

8. Dispositif selon l'une quelconque des revendications précédentes, **caractérisé en ce qu'**il comprend des moyens (30) d'inhibition temporaire des moyens d'articulation.

9. Dispositif selon la revendication 8, **caractérisé en ce que** les moyens d'inhibition des moyens d'articulation comprennent des moyens sécables (30) de liaison des deux parties (12P, 12I, 12D) du cadre, ces moyens de liaison sécables (30) coïncidant de préférence sensiblement avec l'axe d'articulation (T1, T2) des deux parties du cadre.

10. Dispositif selon les revendications 4 et 9 prises ensemble, **caractérisé en ce que** les moyens de liaison sécables forment un tronçon (30) de la nervure de guidage (28).

11. Dispositif selon la revendication 9 ou 10, **caractérisé en ce que** les moyens de liaison sécables (30) sont venus de matière avec la paroi longitudinale (16) du cadre portant les premiers (32) et seconds (34) moyens de limitation du cintrage concave et convexe, cette paroi longitudinale étant en plastique.

12. Dispositif selon l'une quelconque des revendications précédentes, **caractérisé en ce que** le cadre (12) comporte trois parties (12P, 12I, 12D) reliées deux à deux par des moyens (P1, P2) d'articulation autour de deux axes (T1, T2) sensiblement transversaux.

13. Installation de circulation d'air dans un véhicule automobile, **caractérisée en ce qu'**elle comprend un dispositif de filtration (10) selon l'une quelconque des revendications précédentes.

14. Installation selon la revendication 13, **caractérisée en ce qu'**elle approvisionne un habitacle du véhicule en air climatisé ou non.

## Claims

1. An air filter device of the type comprising:
a frame (12) for channeling air and carrying a filter medium (14), the frame (12) being provided with walls (16, 18) extending in longitudinal and transverse directions substantially orthogonal to a general direction (E) of air flow through the frame, the frame (12) comprising at least two portions (12P, 12I, 12D) interconnected by hinge means (P1, P2) about a substantially transverse axis (T1, T2), such that when the hinge means are operational, the frame (12) is deformable between a reference configuration that is substantially plane and at least one configuration that is generally bent in appearance; and
means (32, 34) for limiting bending of the frame (12) by limiting the relative angular displacement between the two portions of the frame about the hinge axis (T1, T2);
the filter medium (14) comprising at least two flats (33) defining a fold (P1, P2) of the filter medium that coincides substantially with the hinge axis (T1, T2) between the two portions of the frame, the device being
**characterized in that**:
. the hinge means (P1, P2) interconnect the portions (12P, 12I, 12D) of the frame in such a manner that, when the hinge means are operational, the frame (12) is deformable between the reference configuration and two bent configurations of opposite curvatures, referred to as concave and convex; and
. the means for limiting bending of the frame comprise first and second bending limitation means (32 and 34) for limiting concave and convex bending respectively, the first and second bending limitation means (32 and 34) for limiting concave and convex bending being formed in at least one of two opposite longitudinal walls (16) of the frame; and
· when the frame (12) is in its reference configuration, it defines first and second opposite air-passing faces (F1 and F2), the first bending limitation means for limiting concave bending comprising two complementary abutments formed by two edges referred to as concave-limit edges (32), longitudinally defining two hinged portions (16P, 16I, 16D) of a longitudinal wall, these complementary concave-limit edges (32) diverging towards the first air-passing face (F1) when the frame (12) is in its reference configuration; and
. second bending limitation means for limiting convex bending comprising two complementary abutments formed by two edges, referred to as convex-limit edges (34), longitudinally defining two hinged portions (16P, 161, 16D) of a longitudinal wall, these complementary convex-limit edges (34) diverging towards the second air-passing face (F2) when the frame is in its reference configuration; and
. the two complementary concave-limit edges (32) extending along two flats (33) of the filter medium (14) defining the fold (P1, P2).

2. A device according to claim 1, **characterized in that** the two hinge portions (16P, 161, 16D) of a longitudinal wall are defined longitudinally by the complementary concave-limit edges (32) and by the complementary convex-limit edges (34), extending said complementary concave-limit edges (32).

3. A device according to claim 1 or claim 2, **characterized in that** the filter medium (14) is generally concertina-shaped and includes folds of different pitches (P, P'), the pitch (P') of the folds (P1, P2) coinciding substantially with a hinge axis (T1, T2) being greater than the pitch (P) of folds not coinciding with a hinge axis (T1, T2).

4. A device according to any preceding claim, **characterized in that** the first and second bending limitation means (32, 34) for limiting concave and convex bending are formed respectively on either side of a longitudinal rib (28) provided on at least one of two opposite longitudinal walls (16) of the frame, in the air flow direction (E), said rib (28) serving to guide the frame in a frame-housing box.

5. A device according to any preceding claim, **characterized in that** the first bending limitation means (32) for limiting concave bending are formed in a zone (Z1) of the frame (12) having a major portion thereof disposed at the same level as the filter medium (14) in the air flow direction (E), the second bending limitation means (34) for limiting convex bending being provided in a zone (Z2) of the frame having a major portion that is offset relative to the filter medium (14) in the air flow direction (E).

6. A device according to any preceding claim, **characterized in that** the filter medium (14) is secured to the frame (12), the hinge means of the two frame portions comprising a hinge-forming portion (P1, P2) of the filter medium.

7. A device according to claim 6, **characterized in that** the hinge-forming portion of the filter medium is defined by a fold (P1, P2) of the filter medium.

8. A device according to any preceding claim, **characterized in that** it includes hinge inhibitor means (30) for temporarily inhibiting the hinge means.

9. A device according to claim 8, **characterized in that** the hinge inhibitor means comprise breakable means (30) interconnecting the two portions (12P, 12I, 12D) of the frame, said breakable connection means (30) preferably coinciding substantially with the hinge axis (T1, T2) of the two frame portions.

10. A device according to claims 4 and 9 taken together, the device being **characterized in that** the breakable connection means form a segment (30) of the guide rib (28).

11. A device according to claim 9 or claim 10, **characterized in that** the breakable connection means (30) are integrally formed with the longitudinal wall (16) of the frame carrying the first and second bending limitation means (32 and 34) for limiting concave and convex bending, said longitudinal wall being made of plastics material.

12. A device according to any preceding claim, **characterized in that** the frame (12) comprises three portions (12P, 12I, 12D) interconnected in pairs by hinge means (P1, P2) about two substantially transverse axes (T1, T2).

13. An air flow installation in a motor vehicle, the installation being **characterized in that** it includes a filter device (10) according to any preceding claim.

14. An installation according to claim 13, **characterized in that** it feeds a vehicle cabin with optionally-conditioned air.

## Patentansprüche

1. Luftfiltervorrichtung, umfassend:
- einen Rahmen (12) zur Kanalisierung von Luft, der ein filterndes Medium (14) trägt, wobei dieser Rahmen (12) mit Wänden (16, 18) ausgestattet ist, die sich einer Längs- und einer Querrichtung folgend erstrecken, die im Wesentlichen senkrecht zu einer allgemeinen Strömungsrichtung (E) der Luft durch den Rahmen sind, wobei der Rahmen (12) mindestens zwei Teile (12P, 12I, 12D) aufweist, die untereinander durch Gelenkmittel (P1, P2) um eine im Wesentlichen transversale Achse (T1, T2) verbunden sind, so dass, wenn diese Gelenkmittel einsatzfähig sind, der Rahmen (12) verformbar ist zwischen einer im Wesentlichen ebenen Bezugsanordnung und mindestens einer Anordnung mit allgemein gewölbtem Aussehen, und
- Mittel (32, 34) zur Begrenzung der Wölbung des Rahmens (12) durch Begrenzung der relativen Winkelverschiebung der beiden Teile des Rahmens um die Gelenkachse (T1, T2),
wobei das filternde Medium (14) mindestens zwei Teilstücke (33) umfasst, die eine Falte (P1, P2) dieses filternden Mediums begrenzen, die im Wesentlichen mit der Gelenkachse (T1, T2) der beiden Teile des Rahmens zusammenfällt, **dadurch gekennzeichnet, dass**:
- die Gelenkmittel (P1, P2) die Teile (12P, 12I, 12D) des Rahmens verbinden, so dass, wenn diese Gelenkmittel einsatzfähig sind, der Rahmen (12) verformbar ist zwischen der Bezugsanordnung und zwei gewölbten Anordnungen mit entgegengesetzten Krümmungen, die als konkav und konvex bezeichnet werden, und
- die Mittel zur Begrenzung der Wölbung des Rahmens erste (32) und zweite (34) Mittel zur Begrenzung der jeweils konkaven und konvexen Wölbung umfassen, wobei diese ersten (32) und zweiten (34) Mittel zur Begrenzung der konkaven und konvexen Wölbung auf mindestens einer von zwei gegenüberliegenden Längswänden (16) des Rahmens angebracht sind, und
- wenn sich der Rahmen (12) in seiner Bezugsanordnung befindet, er eine erste (F1) und eine zweite (F2) Durchlassfläche zum Luftdurchlass begrenzt, die sich gegenüberliegen, wobei die ersten Mittel zur Begrenzung der konkaven Wölbung zwei komplementäre Anschläge aufweisen, die von zwei Rändern gebildet werden, genannt Ränder (32) zur Konkavitätsbegrenzung, die in Längsrichtung zwei angelenkte Teile (16P, 161, 16D) einer Längswand begrenzen, wobei diese komplementären Ränder (32) zur Konkavitätsbegrenzung in Richtung der ersten Fläche (F1) zum Luftdurchlass divergieren, wenn sich der Rahmen (12) in seiner Bezugsanordnung befindet, und
- die zweiten Mittel zur Begrenzung der konvexen Wölbung zwei komplementäre Anschläge aufweisen, die von zwei Rändern gebildet werden, genannt Ränder (34) zur Konvexitätsbegrenzung, die in Längsrichtung zwei angelenkte Teile (16P, 161, 16D) einer Längswand begrenzen, wobei diese komplementären Ränder (34) zur Konvexitätsbegrenzung in Richtung der zweiten Fläche (F2) zum Luftdurchlass divergieren, wenn sich der Rahmen in seiner Bezugsanordnung befindet, und
- sich die beiden komplementären Ränder (32) zur Konkavitätsbegrenzung entlang den beiden Teilstücken (33) des filternden Mediums (14) erstrecken, welche die Falte (P1, P2) begrenzen.

2. Vorrichtung nach Anspruch 1, **dadurch gekennzeichnet, dass** die beiden angelenkten Teile (16P, 161, 16D) einer Längswand in Längsrichtung von den komplementären Rändern (32) zur Konkavitätsbegrenzung und von den komplementären Rändern (34) zur Konvexitätsbegrenzung begrenzt sind, welche diese komplementären Ränder (32) zur Konkavitätsbegrenzung verlängern.

3. Vorrichtung nach Anspruch 1 oder 2, **dadurch gekennzeichnet, dass** das filternde Medium (14) im Allgemeinen die Form eines Akkordeons besitzt und Falten mit unterschiedlichen Abständen (P, P') aufweist, wobei der Abstand (P') der Falten (P1, P2), die im Wesentlichen mit einer Gelenkachse (T1, T2) zusammenfallen, über dem Abstand (P) der Falten liegt, die nicht mit einer Gelenkachse (T1, T2) zusammenfallen.

4. Vorrichtung nach einem der vorangehenden Ansprüche, **dadurch gekennzeichnet, dass** die ersten (32) und zweiten (34) Mittel zur Begrenzung der konkaven und konvexen Wölbung jeweils beiderseits einer Längsrippe (28) angebracht sind, die auf mindestens einer von zwei gegenüberliegenden Längswänden (16) des Rahmens angeordnet ist, unter Berücksichtigung der Strömungsrichtung (E) der Luft, wobei diese Rippe (28) dazu bestimmt ist, den Rahmen in ein Gehäuse zur Unterbringung des Rahmens zu führen.

5. Vorrichtung nach einem der vorangehenden Ansprüche, **dadurch gekennzeichnet, dass** die ersten Mittel (32) zur Begrenzung der konkaven Wölbung in einer Zone (Z1) des Rahmens (12) angebracht sind, deren Hauptteil in gleicher Höhe wie das filternde Medium (14) unter Berücksichtigung der Strömungsrichtung (E) der Luft angeordnet ist, wobei die zweiten Mittel (34) zur Begrenzung der konvexen Wölbung in einer Zone (Z2) des Rahmens angebracht sind, deren Hauptteil in Bezug auf das filternde Medium (14) unter Berücksichtigung der Strömungsrichtung (E) der Luft versetzt ist.

6. Vorrichtung nach einem der vorangehenden Ansprüche, **dadurch gekennzeichnet, dass** das filternde Medium (14) mit dem Rahmen (12) fest verbunden ist, wobei die Gelenkmittel der beiden Teile des Rahmens einen Teil (P1, P2) des filternden Mediums umfassen, der ein Scharnier bildet.

7. Vorrichtung nach Anspruch 6, **dadurch gekennzeichnet, dass** der Teil des filternden Mediums, der ein Scharnier bildet, durch eine Falte (P1, P2) dieses filternden Mediums begrenzt ist.

8. Vorrichtung nach einem der vorangehenden Ansprüche, **dadurch gekennzeichnet, dass** sie Mittel (30) zur zeitweiligen Hemmung der Gelenkmittel umfasst.

9. Vorrichtung nach Anspruch 8, **dadurch gekennzeichnet, dass** die Mittel zur Hemmung der Gelenkmittel teilbare Mittel (30) zur Verbindung der beiden Teile (12P, 12I, 12D) des Rahmens umfassen, wobei diese teilbaren Verbindungsmittel (30) vorzugsweise im Wesentlichen mit der Gelenkachse (T1, T2) der beiden Teile des Rahmens zusammenfallen.

10. Vorrichtung nach den Ansprüchen 4 und 9 insgesamt, **dadurch gekennzeichnet, dass** die teilbaren Verbindungsmittel einen Abschnitt (30) der Führungsrippe (28) bilden.

11. Vorrichtung nach Anspruch 9 oder 10, **dadurch gekennzeichnet, dass** die teilbaren Verbindungsmittel (30) aus dem selben Material wie die Längswand (16) des Rahmens sind, welche die ersten (32) und zweiten (34) Mittel zur Begrenzung der konkaven und konvexen Wölbung trägt, wobei diese Längswand aus Kunststoff besteht.

12. Vorrichtung nach einem der vorangehenden Ansprüche, **dadurch gekennzeichnet, dass** der Rahmen (12) drei Teile (12P, 12I, 12D) aufweist, die immer paarweise durch Gelenkmittel (P1, P2) um zwei im Wesentlichen transversale Achsen (T1, T2) verbunden sind.

13. Luftzirkulationsanlage in einem Kraftfahrzeug, **dadurch gekennzeichnet, dass** diese eine Filtervorrichtung (10) nach einem der vorangehenden Ansprüche umfasst.

14. Anlage nach Anspruch 13, **dadurch gekennzeichnet, dass** diese einen Innenraum des Fahrzeugs mit klimatisierter Luft versorgt oder nicht.
